(19) Europäisches Patentamt
European Patent Office
Office européen des brevets

(11) EP 3 093 550 A1

(12) EUROPEAN PATENT APPLICATION

(43) Date of publication:
16.11.2016 Bulletin 2016/46

(51) Int Cl.:
*F17C 11/00* (2006.01)

(21) Application number: 15167076.7

(22) Date of filing: 11.05.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **BASF SE**
**67056 Ludwigshafen am Rhein (DE)**

(72) Inventors:
- **Weickert, Mathias**
  **67065 Ludwigshafen (DE)**
- **Arnold, Lena**
  **68165 Mannheim (DE)**
- **Mueller, Ulrich**
  **67435 Neustadt (DE)**
- **Marx, Stephan**
  **67246 Dirmstein (DE)**

(74) Representative: **Büchel, Edwin**
**Isenbruck Bösl Hörschler LLP**
**Patentanwälte**
**Eastsite One**
**Seckenheimer Landstraße 4**
**68163 Mannheim (DE)**

# (54) STORAGE VESSEL COMPRISING AT LEAST ONE SHAPED BODY OF A POROUS SOLID

(57) The invention is related to a storage vessel comprising at least one shaped body of a porous solid, wherein the storage vessel comprises a vessel wall and at least one inlet, the storage vessel has a central axis, being a longitudinal axis of the storage vessel and/or perpendicular to a cross-sectional area of the at least one inlet, and a radial cross-sectional area, wherein at least 75% of an inner volume of the storage vessel is covered by the at least one shaped body, the at least one shaped body comprises an opening in an axial direction, axial referring to the central axis of the storage vessel, wherein the opening extends from a first end of the at least one shaped body to an opposing second end of the at least one shaped body and wherein the storage vessel comprises at least one heat conducting plate, which is thermally coupled with the vessel wall. The invention is further related to a process for storage of gas.

Fig. 8

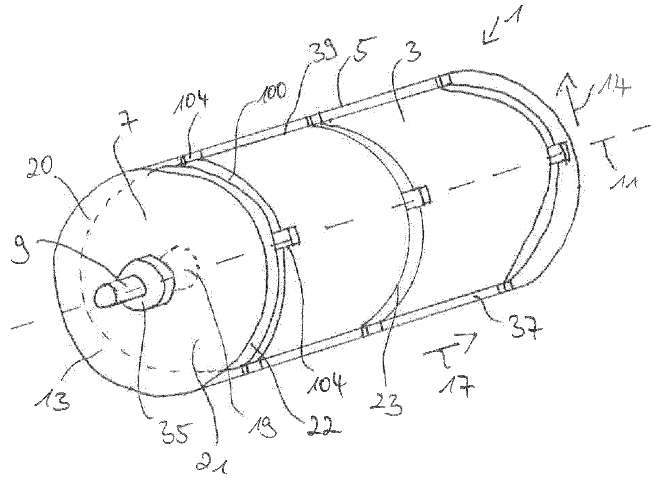


EP 3 093 550 A1

## Description

The invention relates to a storage vessel comprising at least one shaped body of a porous solid. It further relates to a process for storage of gas in the storage vessel.

Owing to the increasing scarcity of oil resources, research is increasingly being made to unconventional fuels such as methane, ethanol or hydrogen for operating an internal combustion engine or a fuel cell. For this purpose, vehicles comprise a storage vessel for keeping a stock of the fuel. For the storage of gas in stationary and mobile applications, the gas is stored in pressure vessels, often referred to as compressed natural gas (CNG) technique or in sorption stores, often referred to as adsorbed natural gas (ANG) technique. Sorption stores are also known as ANG tanks. ANG has the potential to replace compressed natural gas CNG in mobile storage applications such as in vehicles. In ANG-applications a porous solid is packed in a storage vessel to increase the storage density, enabling lower pressure operation with the same capacity.

Sorption, covering adsorption and absorption, is an exothermic process. Any sorption or desorption is accompanied by a temperature change in an ANG-storage system. The heat of sorption has a detrimental effect on performance during both filling cycles and discharge cycles. A temperature increase as high as 80°C can occur during the filling cycle. A filling cycle normally will be performed at a fuel station, at least for mobile applications, where the released sorption heat can be removed. Contrary to the filling cycle, the rate of discharge is dictated by the energy demand for desorption. The filling time cannot be widely varied to moderate the impact of cooling during the use of ANG storage vessels.

Such storage vessels comprise in particular sorbent media having a large internal surface area on which the gas is adsorbed. The gas is stored by adsorption on the adsorbent medium, in the cavities between an individual particle of the adsorbent medium and in parts of the vessel which are not filled with adsorbent medium. Alternatively or additionally the gas can be absorbed by the sorption medium. The filled storage vessel can be pressurized and non-pressurized. Selection of a suitable vessel depends on the applied maximum pressure. The higher the storage pressure the more gas can be stored per volume.

Adsorption describes the attachment of atoms or molecules of a gaseous or liquid fluid onto the surface of a solid material, which is also referred to as adsorbent medium, adsorbent, adsorber, absorber or sorption medium. The sorption capacity of the solid, defined by the ratio of the mass of the sorbed gas or liquid to the mass of the solid, strongly depends on temperature and is reduced with increasing temperature. In the aim of a maximal exploitation of the storage space, the temperature profile established in the storage vessel during the filling procedure has to be taken into consideration. An efficient sorption allows a reduced filling time as the same amount of gas can be stored in a shorter time period. Hence, the maximum amount of stored gas can be increased when the available filling time is limited. During filling the storage vessel with gas two sources are relevant for a temperature increase in the vessel. These are the heat due to compression of the gas and the heat liberated as a result of the exothermic sorption. The amount of generated heat directly depends on the amount of sorbed gas. The more gas is sorbed on the sorbent medium, the more heat is liberated. And with increasing sorbed amount of gas on the solid, the sorption rate, defined as amount of gas sorbed per unit of time, is reduced.

In turn, desorption is an endothermic process and heat has to be supplied when gas is taken from the storage vessel. Heat management is therefore of great importance when storage vessels with sorbent medium are used.

Due to their large surface areas, in particular metal-organic framework materials (MOFs) are of interest for applications in gas storage. Advantageously, pulverulent materials are processed to compact shaped bodies. These can be handled more conveniently and especially in a safer manner. Shaped bodies allow better exploitation of volumes available in apparatuses or vessels and reduce pressure drops. Prerequisite for a successful use for shaped bodies are preliminarily a high sorption capacity, adequate thermal and mechanical stability and high abrasion resistance.

US 2008/0168776 A1 reports on a hydrogen storage tank system based on a gas adsorption on high surface materials comprising an integrated heat exchanger. The gas storage system, storing gas by cryo-adsorption, comprises an insulating container and storage vessels. A cooling fluid is provided to remove heat when the storage vessels are being filled with the gas.

US 2009/0229555 A1 discloses a storage system for an absorbing gas including a plurality of briquette units in a storage tank. Each briquette can include a liner or open vessel, which are associated with compressed gas-absorbing particulate matter. This storage system provides a mechanism for supplying or removing heat. The heat transfer mechanism comprises channels for transporting gas and/or fluid. These channels can pass through a briquette unit.

US 8,100,151 B2 describes gas absorbent media, which are provided in a predetermined length of polygon or curvilinear shape. Additionally, a heat absorbent medium is provided, which allows an improved heat transfer from the absorbent to the outside of the tank during filling. Hexagonal tubes are installed along the radial or the longitudinal axis of a fuel tank. Tubes having a gas sorbent medium therein are installed in a predetermined interrelationship with adjacent spaces, for example also tubes, of similar shape, wherein the adjacent spaces are open or filled with the heat absorbent media. The open spaces are provided to allow gas circulation within the entire interior volume of the tank, which is occupied by a honeycomb assembly. A central heat exchanger is shown in the interior of the tank. Assemblies of sorbent

and spacer tubes, which are open or filled with the heat sorbent medium, may be formed into a plurality of disks.

FR 2 957 636 A1 discloses a method for supplying natural gas to a vehicle during starting of the engine of the vehicle. The temperature inside the gas storage reservoir is controlled by a heating element.

US 2012/0227583 A1 describes a method for purifying a gas flow implementing a contactor having parallel passages while maintaining the performance thereof. Gas distribution is enhanced between contactor zones comprising adsorber by intermediate distributers.

DE 10 2009 040 947 A1 discloses a vessel with a heat conducting body comprising a plurality of openings, wherein an adsorbent is provided in the openings. The porous solid functions as an adsorber bed. The adsorbent is applied in form of powder.

Storage vessels and shaped bodies known from the state of the art are not sufficiently optimized for an efficient heat transfer in the interior of the storage vessel, which is dominated by a flow profile established in the interior of the vessel. In cases where the heat transfer is addressed, a large portion of the inner volume of the storage vessel is occupied by further equipment as for example heat exchangers, which causes additional weight and energy consumption as well as higher construction costs. No particular flow conditions in the storage vessel are disclosed in order to obtain an effective heat transfer.

It is an object of the present invention to provide a storage vessel, which enables an improved flow profile in the interior of the storage vessel allowing an effective heat transfer during filling and high storage capacities. The time required for filling should be shortened. The heat transfer from the interior of the storage vessel and from the at least one shaped body towards the outer vessel wall is to be improved.

This object is achieved by a storage vessel comprising at least one shaped body of a porous solid, wherein the storage vessel comprises a vessel wall and at least one inlet, the storage vessel has a central axis, being a longitudinal axis of the storage vessel and/or perpendicular to a cross-sectional area of the at least one inlet, and a radial cross-sectional area, wherein at least 75% of an inner volume of the storage vessel is covered by the at least one shaped body, the at least one shaped body comprises an opening in an axial direction, axial referring to the central axis of the storage vessel, wherein the opening extends from a first end of the at least one shaped body to an opposing second end of the at least one shaped body and wherein the storage vessel comprises at least one heat conducting plate, which is thermally coupled with the vessel wall.

The storage vessel according to the invention is provided to store a gas, which is preferably usable as fuel. The gas is fed into the storage vessel through the at least one inlet. The gas inside the storage vessel is compressed and absorbed onto or absorbed into the porous solid during filling. Compression and sorption generate heat and thus the gas, the storage vessel and the at least one shaped body heat up. The temperature distribution in the storage vessel depends on the flow conditions and heat transfer conditions in and around the at least one shaped body and tends not to be homogeneous, especially in embodiments according to the state of the art.

By means of the invention, the inner volume of the storage vessel is exploited to a maximum for the provision of the porous solid in order to store a maximum amount of gas. The required gas flow in the storage vessel is possible due to the opening traversing the at least one shaped body.

The at least one shaped body, which can also be referred to as monolith, is made of the porous solid in one piece. The form of the shaped body is constituted only of the porous solid and preferably no further container, shell, cover or envelope is required in the storage vessel to gather the porous material. Typically, the porous solid in a pulverulent form is pressed into the form of the at least one shaped body.

After the gas has entered the storage vessel through the at least one inlet, the gas stream is further conducted in the axial direction into the interior of the storage vessel through the opening in the at least one shaped body.

In addition to the flow profile, the at least one heat conducting plate serves for transferring heat from the interior of the storage vessel, especially from the at least one shaped body towards the vessel wall. From the vessel wall, the heat can be removed towards the environment. The at least one heat conducting plate is especially advantageous as typically the porous solid provides only very restricted heat conducting properties.

A homogeneous heat transfer from the interior of the storage vessel to the vessel wall can be realized. Thus, hotspots in the interior of the storage vessel can be avoided and the effective heat transfer leads to shorter filling times or larger amounts of gas stored in the storage vessel for a constant filling time, respectively.

The storage vessel comprises preferably at least two heat conducting plates, more preferably the number of heat conducting plates present in the storage vessel is expressed by the following equation:

$$n_{\text{heat conducting plates}} = n_{\text{shaped bodies}} + 1$$

The at least one heat conducting plate is preferably made of a metal, more preferably made of steel, magnesium, aluminum or copper, most preferably made of aluminum or copper. The heat conducting plate can also be described as

metal sheet or slice. Usually, the at least one heat conducting plate is flat and has an even surface.

Preferably, a direct contact is provided between the at least one heat conducting plate and the at least one shaped body for at least 30 %, more preferably at least 35 % of the total outer surface of one heat conducting plate.

The at least one heat conducting plate is preferably arranged between two shaped bodies or between one shaped body and the vessel wall. In the case, where the heat conducting plate is located between one shaped body and the vessel wall, up to 50 % of the total outer surface of the heat conducting plate are in contact with the shaped body. In the case, where the heat conducting plate is located between two shaped bodies, up to 99 % of the total outer surface of the heat conducting plate is in contact with the two adjacent shaped bodies.

The at least one heat conducting plate has preferably a thickness in the range from 10 μm to 10 mm, more preferably from 20 μm to 500 μm and most preferably from 30 μm to 300 μm. For a lower thickness, a requested mechanical stability might not be provided. In the case, where the at least one shaped body has a cylindrical form with a thickness of 10 cm and a radius of 20 cm, a thickness of the heat conducting plate of 300 μm is preferred, for a shaped body with a thickness of 1 cm and a radius of 20 cm, a thickness of the heat conducting plate of 50 μm is preferred and for a shaped body with a thickness of 2 mm and a radius of 20 cm, a thickness of 30 μm is preferred.

Preferably, the at least one heat conducting plate is arranged in parallel to the radial cross-sectional area of the storage vessel. In the context of the invention, the term "parallel" also includes cases, where the heat conducting plate is declined in relation to the radial cross-sectional area by up to 30°, more preferably up to 20°, particularly preferably up to 10° and most preferably up to 5°. Being parallel to the radial cross-sectional area of the storage vessel corresponds to being rectangular to the central axis of the storage vessel.

One shaped body is preferably arranged between two heat conducting plates, which are arranged in parallel to each other. Thus, the shaped body is enclosed on its lateral surfaces by a heat conducting plates, respectively, and on its peripheral surface by the vessel wall.

Preferably, the opening traverses the at least one heat conducting plate. Most preferably, the opening has the same diameter in the at least one heat conducting plate and in the at least one shaped body.

In a preferred embodiment, at least one gap is provided between the at least one heat conducting plate and the vessel wall. Through the at least one gap, gas can flow between the at least one heat conducting plate and the vessel wall along the vessel wall. In this case, the thermal coupling between the at least one heat conducting plate and the vessel wall is preferably carried out by heat bridges, which are preferably made of the same material as the at least one heat conducting plate. The heat bridges thermally connect the outer circumference of the at least one heat conducting plate with the vessel wall. Preferably, the heat bridges are located in one plane with the at least one heat conducting plate.

Generally, the heat bridges are extensions of the at least one heat conducting plate. The heat bridges can have the same thickness as the at least one heat conducting plate. Preferably, the heat bridges have a greater thickness than the heat conducting plate. This is advantageous, as the heat bridges can provide stability to the at least one heat conducting plate and associated shaped bodies, referring to a fixed position in the storage vessel.

For an easy assembly of the complete storage vessel the at least one heat conducting plate is preferably already adjoined to the shaped body when the at least one shaped body is produced.

In a preferred embodiment, at least 80 %, more preferably at least 85 % , particularly preferably at least 90 % and most preferably at least 95% of the inner volume of the storage vessel is covered by the at least one shaped body, meaning that the storage vessel is filled with one or more shaped bodies to a maximum extent. When the proportion of the inner volume covered by the at least one shaped body is higher, more porous solid can be provided in the storage vessel for the sorption of the gas. The storage vessel is filled by the porous solid in a pressed form, which is considered to be at least one shaped body.

Depending on the installation space available and the maximum permissible pressure in the storage vessel, different cross-sectional areas are suitable for the storage vessel, for example circular, elliptical or rectangular. Irregularly shaped cross-sectional areas are also possible, e.g. when the vessel is to be fitted into a hollow space of a vehicle body. For high pressures above about 100 bar, circular and elliptical cross sections are particularly suitable. The storage vessel size varies according to the application. Diameters of the storage vessel of approximately 50 cm are typical for tanks in trucks and approximately 20 cm for tanks in cars, respectively. In cars fill volumes between 20 L and 40 L are provided, whereas tanks of a volume between 500 L and 3000 L can be found in trucks. Typically, a diameter of the at least one inlet is by a factor of 5 to 10 smaller than the diameter of the vessel. Preferably the diameter of inlet is smaller than 50 cm, often the diameter of the mouth of the storage vessel has a standardized size as usually applied in tanks for vehicles.

In the context of the invention, the inner volume of the storage vessel is meant to be the volume, which is enclosed by the vessel wall. When the proportion of the inner volume covered by the at least one shaped body is higher, more porous solid can be provided in the storage vessel for the sorption of gas.

The vessel, especially the vessel wall, can be made from any material as for example metal, steel, fabric, fiber, plastic or composite material. Fiber composite material and steel are preferred. The vessel wall can be configured as a double wall comprising a heat transfer medium for heat transfer.

In a preferred embodiment, the vessel wall comprises at least one outlet and at least one inlet. More preferably,

the at least one inlet and the at least one outlet are provided at the same half of the storage vessel. The half can also be named as side or end. The at least one inlet and the at least one outlet can be located in the same position and/or combined in one constructional part or adapter. The close arrangement of the at least one inlet and the at least one outlet is especially advantageous in order to establish a flow-through regime during filling.

Preferably, the at least one shaped body has an extension in one direction in space in a range from 10 cm to 100 cm. Typically, this extension in one direction in space is the radial diameter, referring to the storage vessel, having preferably a cylindrical shape, with a longer axial extension than radial extension.

In a preferred embodiment, the storage vessel comprises exactly one shaped body, which is formed in one piece and wherein the one shaped body covers at least 85 %, more preferably at least 90 % and most preferably at least 93 % of the inner volume of the storage vessel.

In case where the storage vessel comprises only one shaped body, the shaped body has a longest first extension in radial direction and a longest second extension in longitudinal axial direction wherein the longest first extension is smaller than the longest second extension. In a preferred embodiment, the longest first extension of the shaped body is in a range from 10 cm to 100 cm and the longest second extension of the shaped body is in a range from 20 cm to 300 cm. In a further preferred embodiment, applicable for example for cars, the longest second extension of the shaped body is in the range from 20 cm to 120 cm, more preferably from 70 cm to 90 cm, and the longest first extension of the shaped body is in a range from 10 cm to 60 cm, more preferably from 30 cm to 50 cm. In another further preferred embodiment, applicable for example for trucks, the longest second extension of the shaped body is in the range from 100 cm to 300 cm, more preferably from 150 cm to 200 cm and the longest first extension of the shaped body is in a range from 30 cm to 100 cm, more preferably from 40 cm to 60 cm.

Preferably, in a radial cross-sectional view, the form of a circumference of the storage vessel corresponds to the form of a circumference of the shaped body. In a further preferred embodiment, the storage vessel has a cylindrical shape and also the shaped body has the form of a cylinder.

In an embodiment, the outer dimensions of the at least one shaped body in the radial direction correspond to the dimensions of the vessel wall and the circumference of the at least one shaped body is in intimate contact with the vessel wall.

In case where the storage vessel comprises exactly one shaped body, the size of the shaped body corresponds to the dimensions of the storage vessel.

In an alternative embodiment, the storage vessel comprises at least two shaped bodies. In a preferred embodiment, at least 80 %, more preferably at least 85 %, most preferably at least 90 % of the radial cross-sectional area is covered by one of the of the at least two shaped bodies, wherein a ratio between a longest first extension of the one of the of the at least two shaped bodies in a radial direction and the longest second extension of the one of the of the at least two shaped bodies in the axial direction is equal to or greater than 5, axial and radial referring to the central axis of the storage vessel.

In a preferred embodiment, the longest first extension of each of the at least two shaped bodies in radial direction, referring to the storage vessel, is in a range from 10 cm to 100 cm. In a further preferred embodiment, applicable for example for cars, the longest first extension of each of the at least two shaped bodies is in a range from 10 cm to 60 cm, more preferably from 30 cm to 50 cm. In another further preferred embodiment, applicable for example for trucks, the longest first extension of each of the at least two shaped bodies is in a range from 30 cm to 100 cm, more preferably from 40 cm to 60 cm. In a further preferred embodiment, the longest second extension of each of the at least two shaped bodies in axial direction in axial direction, referring to the storage vessel, which can also be described as the thickness of each of the at least two shaped bodies, is less than 10 cm, preferably less than 2 cm and more preferably in a range from 0.5 cm to 1.5 cm, most preferably in a range from 0.8 cm to 1.2 cm. If the second extension is too large and the thickness of each the at least two shaped bodies is too large, respectively, no effective heat transfer can be established within each of the at least two shaped bodies. Further an inner surface of the porous solid might be destroyed by producing shaped bodies with a higher thickness.

Preferably, the storage vessel has a cylindrical shape, each of the at least two shaped bodies has a disk-like shape and the at least two shaped bodies are arranged one next to the other in longitudinal axial direction of the storage vessel. Preferably, in a radial cross-sectional view, the form of the circumference of the storage vessel corresponds to the form of the circumference of each of the at least two shaped bodies.

The storage vessel comprises preferably at least two shaped bodies, which are stacked in the axial direction in the storage vessel, and wherein between the at least two shaped bodies a seal is provided, which is impermeable for a gas contained in the storage vessel.

Preferably, the seal is arranged between two adjacent shaped bodies and joined to a first adjacent shaped body at the circumference of the opening of the first adjacent shaped body and joined to a second adjacent shaped body at the outer circumference of the second adjacent shaped body. A heat conducting plate is preferably arranged between a seal and a shaped body, more preferably the heat conducting plate is arranged on the side of the shaped body, on which the seal is joined to the outer circumference of the shaped body. Optionally, a heat conducting plate can be

provided on both sides of each shaped body, wherein the seal is provided between two heat conducting plates.

In the case, where the storage vessel comprises the seal, two adjacent shaped bodies are isolated from each other by the seal in order to inhibit a direct gas flow over the complete cross section of the storage vessel from one shaped body to the next shaped body.

In a preferred embodiment, the seal has a permeability of less than $10^{-14}$ $m^2$, more preferably less than $10^{-16}$ $m^2$. A thickness of the seal is preferably in the range between 0.5 mm and 5 mm, more preferably between 0.6 mm and 2 mm and most preferably between 0.8 mm and 1.2 mm. The seal can be made of any material which provides the above-mentioned permeability; preferably the seal is made of plastics, as for example, polyethylene. Preferably, the material of the seal is flexible in order to prevent mechanical damage to the porous solid. Preferably, a soft plastic, more preferably thermoresistant plastics, for example polytetrafluoroethylene (PTFE), is applied for edges of the seal in order to lie flat and fit closely to the porous solid.

In the case, where the storage vessel comprises at least two shaped bodies, preferably one heat conducting plate is arranged between the two shaped bodies, the heat conducting plate being an intimate contact with the two shaped bodies.

Independent of the number of shaped bodies present in the storage vessel and assuming a longitudinal central axis of the storage vessel, the at least one shaped body comprises the opening in axial direction, axial referring to the central axis of the storage vessel. Preferably, the at least one shaped body is completely traversed by the opening. Preferably, the longest diameter of the opening is in the range from 0.3 % to 20 % of the longest diameter of the radial cross-sectional area of the storage vessel. The opening is situated preferably centrally and more preferably in prolongation of the at least one inlet of the storage vessel. Thus, gas entering the storage vessel and reaching the at least one shaped body can further be conducted into the storage vessel and the at least one shaped body from the first end of the shaped body to the opposing second end of the at least one shaped body.

Further, the at least one shaped body comprises preferably in addition to the opening hollow channels in axial direction and a cross-sectional area of each hollow channel is smaller than a cross-sectional area of the opening.

An inner diameter of the hollow channels is preferably in a range from 0.5 mm to 3 mm. Preferably, a sum of the cross-sectional areas of all hollow channels is less than 20 %, more preferably less than 10 % and most preferably less than 5 % smaller or greater than the cross-sectional area of the at least one inlet for a reasonable pressure drop during the filling process. A shortest distance between two circumferences of the cross-sectional areas of adjacent hollow channels is less than 2 cm, more preferably in a range from 0.8 to 1.2 cm and most preferably 1 cm. The hollow channels can be distributed homogeneously in an equal distance to each other over the at least one shaped body. Generally every pattern is possible as for example concentric circles.

By means of the hollow channels, a more homogeneous distribution of flow conditions and heat transfer as well as temperature can be achieved in the storage vessel.

Preferably, the at least one heat conducting plate comprises holes, which are present in the at least one heat-conducting plate in addition to the opening. Most preferably, the diameter of the holes equals the diameter of the hollow channels and the holes are arranged in prolongation of the hollow channels. Most preferably, the holes have a largest diameter in the range from 0.5 mm to 100 mm, more preferably from 0.5 to 10 and most preferably from 0.5 to 3 mm for example 1 mm. A distance between the circumferences of two adjacent holes is preferably in a range from 0.1 cm to 3 cm, more preferably from 0.5 to 2 cm, most preferably from 0.8 to 1.2 cm, for example 1 cm. The holes preferably have a circular form.

In an alternative preferred embodiment, the at least one heat conducting plate comprises 2 to 10, more preferably 3 to 8, for example 4 holes or 3 holes. The sum of the cross-sectional areas of all holes present in one heat-conducting plate is preferably in a range from 5 % to 90 %, more preferably from 10 % to 60 % and most preferably from 10 % to 40%, referring to the total cross-sectional area of the heat conducting plate. For this embodiment, the form of the heat conducting plate can be described as outer ring with radial bridges towards the center, comparable to a wheel.

The at least one heat conducting plate also serves for stabilizing the at least one shaped body and keeping the porous solid together. In case, where no holding of the porous solid to the shaped body is needed, the sum of the cross-sectional area of the holes is preferably from 20 to 80 %. The diameter of each hole is preferably between a third to a tenth of the cross-sectional area of the at least one shaped body.

The at least one shaped body can comprise at least one spacer providing an open space or void space, which is free of the porous solid, between the at least one shaped body and/or the storage vessel wall or between two shaped bodies.

Preferably, at least one first spacer is provided on the lateral surface or next to the lateral surface of the at least one shaped body, the lateral surface facing in the axial direction. In the latter case the at least one first spacer is preferably provided on the inner wall of the storage vessel. In this embodiment, the vessel wall facing to the interior of the storage vessel is not even, but providing several convexities, which are in contact with and holding the at least one shaped body. For this embodiment, the at least one shaped body is preferably inserted into the storage vessel during the production process of the storage vessel and the at least one shaped body is disposed in the storage vessel before the vessel wall

is closed. Alternatively, the vessel wall is provided in at least two parts, which are fixed to each other after the at least one shaped body is inserted, for example by sideways sliding in the at least one shaped body between two first spacers.

Preferably, more than one shaped body is arranged in the storage vessel. Due to the at least one first spacer an open space, which is free of the porous solid, is provided between two adjacent shaped bodies. When the storage vessel is filled with the gas, the gas passes through the opening of a first shaped body and is further conducted partially through the opening of a second shaped body and partially into the open space between two adjacent shaped bodies. By this means, a flow in the radial direction is established in the storage vessel and heat generated near the center axis of the storage vessel can be transferred to the vessel wall, from where it can be emitted to the environment.

In a further preferred embodiment, at least three first spacers are provided per shaped body, more preferably four first spacers are provided per shaped body. The more first spacers are provided per shaped body, the better a tilting of the shaped bodies towards each other can be avoided.

In a further preferred embodiment, the at least first spacer is a rim, which is preferably arranged on the outer circumference of the at least one shaped body. By means of the rim the open space between adjacent shaped bodies is closed at one end such that a flow resistance is generated and a difference in flow velocity in different open spaces between two shaped bodies in the storage vessel becomes smaller. As the flow resistance is provided by the rim, for example in a first open space, part of the incoming gas from the inlet continues flowing through the opening of the next shaped body to reach further open spaces between other shaped bodies. Preferably, the rim, which can also be referred to as ring, is closed over the circumference of the at least one shaped body and a width of the rim in the radial direction is preferably in a range from 1 mm to 1 cm. Preferably, the rim has a permeability in the radial direction in a range from $10^{-12}$ $m^2$ to $10^{-15}$ $m^2$.

In a further preferred embodiment the at least one shaped body comprises on only one lateral surface at least one first spacer and at least two shaped bodies are arranged in the storage vessel in a way that all lateral surfaces with at least one first spacer of the at least two shaped bodies are facing in the same direction. Consequently, the open space between two adjacent shaped bodies is generated by at least one first spacer belonging to the same shaped body. And first spacers belonging to different shaped bodies are not facing to each other. The lateral surface of the at least one shaped body not comprising at least one first spacer is planar without convexities.

In a further preferred embodiment, a distance between a first shaped body and a second shaped body, arranged adjacently to each other in the storage vessel, is more than 0.1 mm and less than 10 % of the longest second extension of at least one of the two shaped bodies. The distance is measured between two adjacent lateral surfaces of the first and the second shaped body, respectively. The distance between two shaped bodies can be adjusted by a height of the at least one first spacer. Preferably the height of the at least one first spacer and therefore also the distance between two adjacent shaped bodies in the storage vessel is from 0.5 to 0.6 mm. Preferably, all first spacers in one open space between two adjacent shaped bodies are of the same height, whereas the height can differ to the height of spacers in another open space in the storage vessel.

In a further preferred embodiment, at least 85 %, more preferably 90 % and particularly preferably at least 95 % of the radial cross-sectional area of the storage vessel is covered by the at least one shaped body. When the proportion of the cross-sectional area covered by the at least one shaped body is higher, more porous solid can be provided in the storage vessel for the sorption of the gas.

In a further preferred embodiment, the at least one shaped body comprises at least one second spacer on a peripheral surface, which faces in the radial direction. The peripheral surface preferably faces directly towards the vessel wall, independently from the number of shaped bodies arranged in the storage vessel and the position of the at least one shaped body in the storage vessel.

Preferably, the at least one shaped body comprises at least three second spacers, more preferably four second spacers in order to generate a slot with a constant width between the at least one shaped body and the vessel wall. The at least one second spacer is provided only on several points of the peripheral surface and is not covering the complete circumference of the at least one shaped body in order to ensure the slot being provided between the at least one shaped body and the wall. Through this slot gas can flow without particular flow resistance. The presence of the second spacer is especially advantageous in case of a filling process according to WO 2014/057416. Particularly when the filling process with established flow-through is applied, a gas stream can flow through the slot from the at least one inlet to a closed end of the storage vessel and further from the closed end to the at least one outlet. In the scope of the invention the closed end can be located at the side or at the bottom in relation to the rest of the storage vessel, as the storage vessel can be mounted horizontally or vertically. A horizontal position is preferred.

Instead of at least one second spacer, the circumference of the at least one shaped body can have an irregular shape due to which contact areas between the peripheral surface of the at least one shaped body with the wall and slots alternate.

Preferably, the heat bridges are arranged in coverage with the second spaces in order to maximize the cross-sectional area, which can be flown through by the gas.

The first and/or the second spacer can be present in the case, where exactly one shaped body is present in

the storage vessel and also in the case, where at least two shaped bodies are present in the storage vessel.

In the scope of the invention the term "spacer" on the one hand covers parts, which are attached additionally to the at least one shaped body or to the vessel wall and which are made of a material other than the at least one shaped body or the vessel wall. On the other hand convexities of the at least one shaped body or the vessel wall are covered. In the latter case, the spacers are made of the same material as the at least one shaped body or the storage vessel wall, respectively, and they are formed continuously in one piece with the at least one shaped body or the vessel wall, respectively. The spacers can be formed in one process step simultaneously with the pressing of the at least one shaped body. In a preferred embodiment, the at least one first spacers and/or and the at least one second spacers are formed in one piece with the at least one shaped body.

In the case, where the storage vessel comprises at least two shaped bodies without any spacer, the at least two shaped bodies and the at least one heat conducting plate preferably have the same circumferential form and the resulting arrangement can also be described as one shaped body completely filling the storage vessel and comprising thin layers of heat conducting plates.

In a further preferred embodiment, the porous solid is selected from the group consisting of activated charcoal, zeolites, activated aluminia, silica gels, open-pore polymer foams, metal hydrides, metal-organic frameworks (MOF) and combinations thereof.

Zeolites are crystalline aluminosilicates having a microporous framework structure made up of $AlO_4$ and $SiO_4$ tetrahedra. Here, the aluminum and silicon atoms are joined to one another via oxygen atoms. Possible zeolites are zeolite A, zeolite Y, zeolite L, zeolite X, mordenite, ZSM (Zeolites Socony Mobil) 5 or ZSM 11. Suitable activated carbons are in, particular, those having a specific surface area above $500m^2\ g^{-1}$, preferably about $1500m^2\ g^{-1}$, very particularly preferably above $3000m^2\ g^{-1}$. Such an activated carbon can be obtained, for example under the name Energy to Carbon or MaxSorb. Metal-organic frameworks usually comprise an at least bidentate organic compound, which is coordinated to a metal component and together with the metal component forms the skeleton of the metal-organic framework. The metal-organic framework materials as such are described, for example, in US 5,648,508, EP-A-0 709 253, M. O'Keeffe et al., J. Sol. State Chem., 152 (2000), pages 3-20, H. Li et al., Nature 402 (1999), pages 276 seq., M. Eddaoudi et al. Topics in Catalysis 9 (1999), pages 105-111, B. Chen et al., Science 291 (2001), pages 1021-1023.

The metal component in the framework according to the present invention is preferably selected from groups Ia, IIa, IIIa, IVa to VIIIa and Ib to VIb of the periodic table. Particular preference is given to Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Tl, Si, Ge, Sn, Pb, As, Sb and Bi, where Ln represents lanthanides.

Lanthanides are La, Ce, Pr, Nd, Pm, Sm, En, Gd, Tb, Dy, Ho, Er, Tm, Yb.

As regards the ions of these elements, particular mention may be made of $Mg^{2+}$, $Ca^{2+}$, $Sr^{2+}$, $Ba^{2+}$, $Sc^{3+}$, $Y^{3+}$, $Ln^{3+}$, $Ti^{4+}$, $Zr^{4+}$, $Hf^{4+}$, $V^{4+}$, $V^{3+}$, $V^{2+}$, $Nb^{3+}$, $Ta^{3+}$, $Cr^{3+}$, $Mo^{3+}$, $W^{3+}$, $Mn^{3+}$, $Mn^{2+}$, $Re^{3+}$, $Re^{2+}$, $Fe^{3+}$, $Fe^{2+}$, $Ru^{3+}$, $Ru^{2+}$, $Os^{3+}$, $Os^{2+}$, $Co^{3+}$, $Co^{2+}$, $Rh^{2+}$, $Rh^{+}$, $Ir^{2+}$, $Ir^{+}$, $Ni^{2+}$, $Ni^{+}$, $Pd^{2+}$, $Pd^{+}$, $Pt^{2+}$, $Pt^{+}$, $Cu^{2+}$, $Cu^{+}$, $Ag^{+}$, $Au^{+}$, $Zn^{2+}$, $Cd^{2+}$, $Hg^{2+}$, $Al^{3+}$, $Ga^{3+}$, $In^{3+}$, $Tl^{3+}$, $Si^{4+}$, $Si^{2+}$, $Ge^{4+}$, $Ge^{2+}$, $Sn^{4+}$, $Sn^{2+}$, $Pb^{4+}$, $Pb^{2+}$, $As^{5+}$, $As^{3+}$, $As^{+}$, $Sb^{5+}$, $Sb^{3+}$, $Sb^{+}$, $Bi^{5+}$, $Bi^{3+}$ and $Bi^{+}$.

Very particular preference is given to Mg, Ca, Al, Y, Sc, Zr, Ti, V, Cr, Mo, Fe, Co, Cu, Ni, Zn, Ln. Greater preference is given to Mg, Zr, Ni, Al, Mo, Y, Sc, Mg, Fe, Cu and Zn. In particular, Mg, Fe, Zr, Sc, Al, Cu and Zn are preferred. Very particular mention may here be made of Mg, Zr, Al, Cu and Zn.

The term "at least bidentate organic compound" refers to an organic compound which comprises at least one functional group which is able to form at least two coordinate bonds to a given metal ion and/or to form one coordinate bond to each of two or more, preferably two, metal atoms.

As functional groups via which the abovementioned coordinate bonds are formed, particular mention may be made by way of example of the following functional groups: $-CO_2H$, $-CS_2H$, $-NO_2$, $-B(OH)_2$, $-SO_3H$, $-Si(OH)_3$, $-Ge(OH)_3$, $-Sn(OH)_3$, $-Si(SH)_4$, $-Ge(SH)_4$, $-Sn(SH)_3$, $-PO_3H$, $-AsO_3H$, $-AsO_4H$, $-P(SH)_3$, $-As(SH)_3$, $-CH(RSH)_2$, $-C(RSH)_3$ $-CH(RNH_2)_2$ $-C(RNH_2)_3$, $-CH(ROH)_2$, $-C(ROH)_3$, $-CH(RCN)_2$, $-C(RCN)_3$, where R is, for example, preferably an alkylene group having 1, 2, 3, 4 or 5 carbon atoms, for example a methylene, ethylene, n-propylene, i-propylene, n-butylene, i-butylene, tert-butylene or n-pentylene group, or an aryl group comprising 1 or 2 aromatic rings, for example 2 $C_6$ rings, which may optionally be fused and may, independently of one another, be appropriately substituted by at least one substituent in each case and/or may, independently of one another, in each case comprise at least one heteroatom such as N, O and/or S. In likewise preferred embodiments, mention may be made of functional groups in which the above-mentioned radical R is not present. In this respect, mention may be made of, inter alia, $-CH(SH)_2$, $-C(SH)_3$, $-CH(NH_2)_2$, $-C(NH_2)_3$, $-CH(OH)_2$, $-C(OH)_3$, $-CH(CN)_2$ or $-C(CN)_3$.

However, the functional groups can also be heteroatoms of a heterocycle. Particularly nitrogen atoms may here be mentioned.

The at least two functional groups can in principle be bound to any suitable organic compound as long as it is ensured that the organic compound bearing these functional groups is capable of forming the coordinate bond and of producing the framework.

The organic compounds comprising the at least two functional groups are preferably derived from a saturated

or unsaturated aliphatic compound or an aromatic compound or a both aliphatic and aromatic compound.

The aliphatic compound or the aliphatic part of the both aliphatic and aromatic compound can be linear and/or branched and/or cyclic, with a plurality of rings per compound also being possible. The aliphatic compound or the aliphatic part of the both aliphatic and aromatic compound more preferably comprises from 1 to 15, more preferably from 1 to 14, more preferably from 1 to 13, more preferably from 1 to 12, more preferably from 1 to 11 and particularly preferably from 1 to 10, carbon atoms, for example 1, 2, 3, 4, 5, 6, 7, 8, 9 or 10 carbon atoms. Particular preference is here given to, inter alia, methane, adamantane, acetylene, ethylene or butadiene.

The aromatic compound or the aromatic part of the both aromatic and aliphatic compound can have one or more rings, for example two, three, four or five rings, with the rings being able to be present separately from one another and/or at least two rings being able to be present in fused form. The aromatic compound or the aromatic part of the both aliphatic and aromatic compound particularly preferably has one, two or three rings, with one or two rings being particularly preferred. Furthermore, each ring of said compound can independently comprise at least one heteroatom, for example N, O, S, B, P, Si, Al, preferably N, O and/or S. The aromatic compound or the aromatic part of the both aromatic and aliphatic compound more preferably comprises one or two $C_6$ rings, with the two being present either separately from one another or in fused form. In particular, mention may be made of benzene, naphthalene and/or biphenyl and/or bipyridyl and/or pyridyl as aromatic compounds.

The at least bidentate organic compound is more preferably an aliphatic or aromatic, acyclic or cyclic hydrocarbon which has from 1 to 18, preferably from 1 to 10 and in particular 6, carbon atoms and additionally has exclusively 2, 3 or 4 carboxyl groups as functional groups.

The at least one at least bidentate organic compound is preferably derived from a dicarboxylic, tricarboxylic or tetracarboxylic acid.

For example, the at least bidentate organic compound is derived from a dicarboxylic acid such as oxalic acid, succinic acid, tartaric acid, 1,4-butanedicarboxylic acid, 1,4-butenedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxlic acid, heptadecanedicarboxylic acid, acetylenedicarboxylic acid, 1,2-benzenedicarboxylic acid, 1,3-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimidedicarboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octanedicarboxylic acid, pentane-3,3-dicarboxylic acid, 4,4'-diamino-1,1'-biphenyl-3,3'-dicarboxylic acid, 4,4'-diaminobiphenyl-3,3'-dicarboxylic acid, benzidine-3,3'-dicarboxylic acid, 1,4-bis(phenylamino)benzene-2,5-dicarboxylic acid, 1,1'-binaphthyldicarboxylic acid, 7-chloro-8-methylquinoline-2,3-dicarboxylic acid, 1-anilinoanthraquinone-2,4'-dicarboxylic acid, polytetrahydrofuran 250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro)phenylpyrazoline-4,5-dicarboxylic acid, 1,4,5,6,7,7-hexachloro-5-norbornene-2,3-dicarboxylic acid, phenylindanedicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidene-4,5-cis-dicarboxylic acid, 2,2'-biquinoline-4,4'-dicarboxylic acid, pyridine-3,4-dicarboxylic acid, 3,6,9-trioxaundecanedicarboxylic acid, hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, 4,4'-diamino(diphenyl ether)diimidedicarboxylic acid, 4,4'- diaminodiphenylmethanediimidedicarboxylic acid, 4,4'-diamino(diphenyl sulfone) diimidedicarboxylic acid, 1,4-naphthalenedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenedicarboxylic acid, 8-sulfo-2,3-naphthalenedicarboxylic acid, anthracene-2,3-dicarboxylic acid, 2',3'-diphenyl-p-terphenyl-4,4"-dicarboxylic acid, (diphenyl ether)-4,4'-dicarboxylic acid, imidazole-4,5-dicarboxylic acid, 4(1 H)-oxothiochromene-2,8-dicarboxylic acid, 5-tert-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptanedicarboxylic acid, 5-hydroxy-1,3-benzenedicarboxylic acid, 2,5-dihydroxy-1,4-dicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxydiphenylmethane-3,3'-dicarboxylic acid, 1-amino-4-methyl-9,10-dioxo-9,10-dihydroanthracene-2,3-dicarboxylic acid, 2,5-pyridinedicarboxylic acid, cyclohexene-2,3-dicarboxylic acid, 2,9-dichlorofluorubin-4,11-dicarboxylic acid, 7-chloro-3-methylquinoline-6,8-dicarboxylic acid, 2,4-dichlorbenzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1 H-pyrrole-3,4-dicarboxylic acid, anthraquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid 1,14-tetradecanedicarboxylic acid, 5,6-dehydronorbornane-2,3-dicarboxylic acid, 5-ethyl-2,3-pyridinedicarboxylic acid or camphordicarboxylic acid.

Furthermore, the at least bidentate organic compound is more preferably one of the dicarboxylic acids mentioned by way of example above as such.

The at least bidentate organic compound can, for example, be derived from a tricarboxylic acid such as 2-hydroxy-1,2,3-propanetricarboxylic acid, 7-chloro-2,3,8-quinolinetricarboxylic acid, 1,2,3-, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-dihydro-4,5-dioxo-1 H-pyrrolo[2,3-F]quinoline-2,7,9-tricarboxylic acid, 5-acetyl-3-amino-6-methylbenzene-1,2,4-tricarboxylic acid, 3-amino-5-benzoyl-6-methylbenzene-1,2,4-tricarboxy-lic acid, 1,2,3-propanetricarboxylic acid or aurintricarboxylic acid.

Furthermore, the at least bidentate organic compound is more preferably one of the tricarboxylic acids mentioned by way of example above as such.

Examples of an at least bidentate organic compound derived from a tetracarboxylic acid are 1,1-dioxidoperylo[1,12-BCD]thiophene-3,4,9,10-tetracarboxylic acid, perylenetetracarboxylic acids such as perylene-3,4,9,10-tetracarboxylic acid or (perylene-1,12-sulfone)-3,4,9,10-tetracarboxylic acid, butanetetracarboxylic acids such as 1,2,3,4-butanetetracarboxylic acid or meso-1,2,3,4-butanetetracarboxylic acid, decane-2,4,6,8-tetracarboxylic acid, 1,4,7,10,13,16-hexaoxacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octanetetracarboxylic acid, 1,4,5,8-naphthalenetetracarboxylic acid, 1,2,9,10-decanetetracarboxylic acid, benzophenonetetracarboxylic acid, 3,3',4,4'-benzophenonetetracarboxylic acid, tetrahydrofurantetracarboxylic acid or cyclopentanetetracarboxylic acids such as cyclopentane-1,2,3,4-tetracarboxylic acid.

Furthermore, the at least bidentate organic compound is more preferably one of the tetracarboxylic acids mentioned by way of example above as such.

Preferred heterocycles as at least bidentate organic compound in which a coordinate bond is formed via the ring heteroatoms are the following substituted or unsubstituted ring systems:

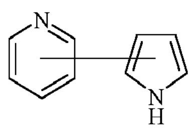 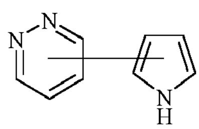 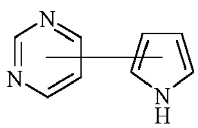 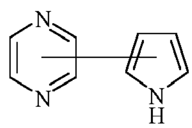

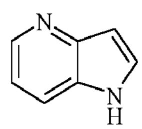 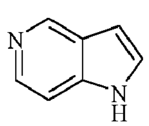 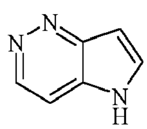 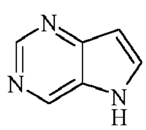 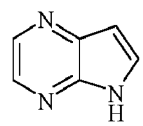

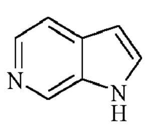 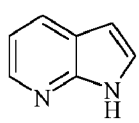 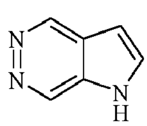 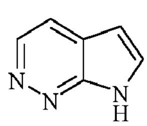 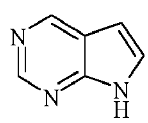

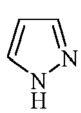 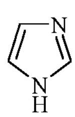 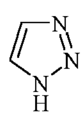 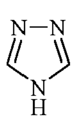 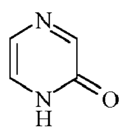 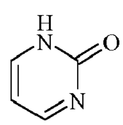 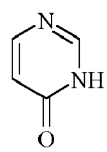

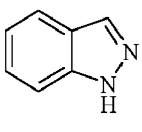 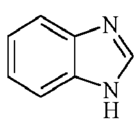 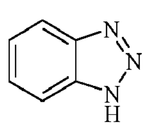 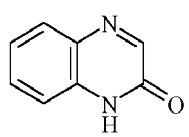

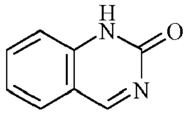 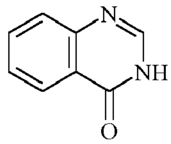

Very particular preference is given to using optionally at least monosubstituted aromatic dicarboxylic, tricarboxylic or tetracarboxylic acids which can have one, two, three, four or more rings, with each of the rings being able to comprise at least one heteroatom and two or more rings being able to comprise identical or different heteroatoms. For example preference is given to one-ring dicarboxylic acids, one-ring tricarboxylic acids, one-ring tetracarboxylic acids, two-ring dicarboxylic acids, two-ring tricarboxylic acids, two-ring tetracarboxylic acids, three-ring dicarboxylic acids, three-ring tricarboxylic acids, three-ring tetracarboxylic acids, four-ring dicarboxylic acids, four-ring tricarboxylic acids and/or four-ring tetracarboxylic acids. Suitable heteroatoms are, for example, N, O, S, B, P, and preferred heteroatoms are N, S and/or O. Suitable substituents here are, inter alia, -OH, a nitro group, an amino group or an alkyl or alkoxy group.

Particularly preferred at least bidentate organic compounds are imidazolates such as 2-methylimidazolate, acetylenedicarboxylic acid (ADC), camphordicarboxylic acid, fumaric acid, succinic acid, benzenedicarboxylic acids such as phthalic acid, isophthalic acid, terephthalic acid (BDC), aminoterephthalic acid, triethylenediamine (TEDA), methylglycinediacetic acid (MGDA), naphthalenedicarboxylic acids (NDC), biphenyldicarboxylic acids such as 4,4'-biphenyldicarboxylic acid (BPDC), pyrazinedicarboxylic acids such as 2,5-pyrazinedicarboxylic acid, bipyridinedicarboxylic acids such as 2,2'-bipyridinedicarboxylic acids such as 2,2'-bipyridine-5,5'-dicarboxylic acid, benzenetricarboxylic acids such as 1,2,3-, 1,2,4-benzenetricarboxylic acid or 1,3,5-benzenetricarboxylic acid (BTC), benzenetetracarboxylic acid, adamantanetetracarboxylic acid (ATC), adamantanedibenzoate (ADB), benzenetribenzoate (BTB), methanetetrabenzoate (MTB), adamantanetetrabenzoate or dihydroxyterephthalic acids such as 2,5-dihydroxyterephthalic acid (DHBDC), tetrahydropyrene-2,7-dicarboxylic acid (HPDC), biphenyltetracarboxylic acid (BPTC), 1,3-bis(4-pyridyl)propane (BPP).

Very particular preference is given to using, inter alia, 2-methylimidazole, 2-ethylimidazole, phthalic acid, isophthalic acid, terephthalic acid, 2,6-naphthalenedicarboxylic acid, 1,4-naphthalenedicarboxylic acid, 1,5-naphthalenedicarboxylic acid, 1,2,3-benzenetricarboxylic acid, 1,2,4-benzenetricarboxylic acid, 1,3,5-benzenetricarboxylic acid, 1,2,4,5-benzenetetracarboxylic acid, aminoBDC, TEDA, fumaric acid, biphenyldicarboxylate, 1,5- and 2,6-naphthalenedicarboxylic acid, tert-butylisophthalic acid, dihydroxybenzoic acid, BTB, HPDC, BPTC, BPP, fumaric acid.

Apart from these at least bidentate organic compounds, the metal-organic framework can also comprise one or more monodentate ligands and/or one or more at least bidentate ligands which are not derived from a dicarboxylic, tricarboxlic or tetracarboxylic acid.

For the purposes of the present invention, the term "derived" means that the at least one at least bidentate organic compound is present in partially or fully deprotonated form. Furthermore, the term "derived" means that the at least one at least bidentate organic compound can have further substituents. Thus, a dicarboxylic or polycarboxylic acid can have not only the carboxylic acid function but also one or more independent substituents such as amino, hydroxyl, methoxy, halogen or methyl groups. Preference is given to no further substituent being present. For the purposes of the present invention, the term "derived" also means that the carboxylic acid function can be present as a sulfur analogue. Sulfur analogues are -C(=O)SH and its tautomer and -C(S)SH.

Even more preferably, the at least one at least bidentate organic compound is selected from the group consisting of fumaric acid (FUM), terephthalic acid (BDC), benzene tricarboxylate (BTC, also known as trimesic acid), 2-methylimidazole and benzene tribenzoate (BTB) and/or the at least one metal ion is an ion selected from the group of metals consisting of Mg, Zr, Zn, Cu and Al (more preferably Zn, Cu and Al).

The term "and/or" combining two options means the first option or the second option or both, the first and the second option.

Examples of suitable metal-organic framework materials are copper-1,3,5-BTC, aluminum fumarate, zinc benzene tribenzoate and zinc 2-methylimidazolate.

The pore sizes of the metal-organic framework can be adjusted by selecting suitable organic ligands and/or bidendate compounds, also called linkers. Generally, the larger the linker is, the larger the pore size. Any pore size that is still supported by a metal-organic framework in the absence of a host and at temperatures of at least 200 °C is conceivable. Pore sizes ranging from 0.2 nm to 30 nm are preferred, with pore sizes ranging from 0.3 nm to 3 nm being particularly preferred.

Metal organic framework comprises pores, in particular micropores or mesopores. Micropores are defined as pores having a diameter of 2 nm or less and mesopores are defined by a diameter in the range from 2 to 50 nm (Pure & Appl. Chem. 57 (1985) 603-619). The presence of micropores and/or mesopores can be checked by means of sorption measurements which determine the uptake capacity of the metal organic frameworks for nitrogen at 77 Kelvin in accordance with DIN 66134:1998-2.

Apart from the conventional method of preparing the MOFs, as described, for example, in US 5,648,508, these

can also be prepared by an electrochemical route. In this regard, reference may be made to DE-A 103 55 087 and WO-A 2005/049892. The metal organic frameworks prepared in this way have particularly good properties in respect of the sorption and desorption of chemical substances, in particular gases.

Particularly suitable materials for the adsorption in storage vessels are the metal-organic framework materials MOF A520, MOF Z377 and MOF C300.

MOF A 520 is based on aluminum fumarate. The specific surface area of a MOF A520, measured by porosimetry or nitrogen adsorption, is typically in the range of from 800 $m^2/g$ to 2000 $m^2/g$. The adsorption enthalpy of MOF A520 with regard to natural gas amounts to 17 kJ/mol. Further information on this type of MOF may be found in "Metal-Organic Frameworks, Wiley-VCH Verlag, David Farrusseng, 2011 ". MOF Z377, in literature also referred to as MOF 177, is based on zinc-benzene-tribenzoate. The specific surface area of a MOF Z377, measured by porosimetry or nitrogen adsorption, is typically in the range from 2000 $m^2/g$ to 5000 $m^2/g$. The MOF Z377 typically possesses an adsorption enthalpy between 12 kJ/mol and 17 kJ/mol with respect to natural gas. MOF C300 is based on copper benzene-1,3,5-tricarboxylate and for example commercially available from Sigma Aldrich under the trade name Basolite® C300.

WO-A-03/102000 describes in general terms the conversion of metal-organic framework powder into shaped bodies like pellets with a resistance to pressure in the range from 2 to 100 N. In an example pellets which have a resistance to pressure of 10 N are made by means of eccentric press.

To form shaped bodies several routes exist, among them molding the pulverulent material alone or in combination with a binder and/or other components into a shaped body, for example by pelletizing. In the context of the present invention, the term "molding" refers to any process known to the expert in the field by which a porous material, i.e. any powder, powdery substance, array of crystallites etc., can be formed into a shaped body that is stable under the conditions of its intended use.

While the step of molding into a shaped body is mandatory, the following steps are optional. The molding may be preceded by a step of mixing. The molding may be preceded by a step of preparing a paste-like mass or a fluid containing the porous material, for example by adding solvents, binders or other additional substances. The molding may be followed by a step of finishing, in particular a step of drying.

The step of molding, shaping or forming may be achieved by any method known to a person skilled in the art to achieve agglomeration of a powder, a suspension or a paste-like mass. Such methods are described, for example, in Ullmann's Enzyklopädie der Technischen Chemie, 4th Edition, Vol. 2, p. 313 et seq., 1972, whose respective content is incorporated into the present application by reference.

In general, the following main pathways can be discerned: briquetting or tableting, i.e. mechanical pressing of the powdery material, with or without binders and/or other additives, granulating (pelletizing), i.e. compacting of moistened powdery materials by subjecting it to rotating movements, and sintering, i.e. subjecting the material to be compacted to a thermal treatment. The latter is limited for the material according to the invention due to the limited temperature stability of the organic materials.

Specifically, the molding step according to the invention is preferably performed by using at least one method selected from the following group: briquetting by piston presses, briquetting by roller pressing, binderless briquetting, briquetting with binders, pelletizing, compounding, melting, extruding, co-extruding, spinning, deposition, foaming, spray drying, coating, granulating, in particular spray granulating or granulating according to any process known within the processing of plastics or any combination of at least two of the aforementioned methods. Briquetting and/or pelletizing are in particular preferred.

A mixture comprising the porous material can be prepared in a mixer such as intensive mixers, rotary plates, marumerizers, and any other equipment known by a person skilled in the art. Preferred mixers are selected from the group consisting of intensive mixers, rotary plates, ball formers and marumerizers.

The molding can be carried out at elevated temperatures, for example in the range from room temperature to 300°C, and/or at superatmospheric pressure, for example in the range from atmospheric pressure to a few hundred bar, and/or in a protective gas atmosphere, for example in the presence of at least one noble gas, nitrogen, dry air with a relative humidity of preferably less than 45% or a mixture of two or more thereof. The shaped bodies can be formed for example in an excenter press. A compacting force is preferably between 1 kN and 3000 kN, more preferably between 1 kN and 300 kN and most preferably between 10 kN and 150 kN. For higher forces the permeability of the shaped bodies is unnecessarily reduced and for smaller forces no stable shaped bodies are obtained. The smaller the shaped body, the higher the applied force can be chosen.

Preferably, the at least one shaped body is produced with a pressing pressure in a range from 100 bar to 1000 bar, more preferably from 400 bar to 600 bar. The applied press can comprise an upper punch for compaction or it can compact from both sides with an upper punch and a lower punch. Further, the pressing can be performed under vacuum in order to avoid damaging the porous solid.

The step of molding can be performed in the presence of binders, lubricants and/or other additional substances that stabilize the materials to be agglomerated. As to at least one optional binder, any material known to an expert to promote adhesion between the particles to be molded together can be employed. A binder, an organic viscosity-enhancing

compound and/or a liquid for converting the material into a paste can be added to the pulverulent material, with the mixture being subsequently compacted.

Suitably binders, lubricants or additives are, for example, aluminum oxide or binders comprising aluminum oxide, as described, for example, in WO 94/29408, silicon dioxide, as described, for example, in EP 0 592 050 A1, mixtures of silicon dioxide and aluminum oxide, as described, for example, in WO 94/13584, clay minerals as described, for example, in JP 03-037156 A, for example montmorillonite, kaolin, bentonite, hallosite, dickite, nacrite and anauxite, alkoxysilanes as described, for example, in EP 0 102 544 B1, for example tetraalkoxysilanes such as tetramethoxysilane, tetraethoxysilane, tetrapropoxysilane, tetrabutoxysilane, or, for example, trialkoxysilanes such as trimethoxysilane, triethoxysilane, tripropoxysilane, tributoxysilane, alkoxytitanates, for example tetraalkoxytitanates such as tetramethoxytitanate, tetraethoxytitanate, tetrapropoxytitanate, tributoxytitanate, or, for example, trialkoxytitanates, such as trimethoxytitanate, triethoxytitanate, tripropoxytitanate, tributoxytitanate, alkoxyzirconates, for example tetraalkoxyzirconates such as tetramethoxyzirconate, tetraethoxyzirconate, tetrapropoxyzirconate, tetrabutoxyzirconate, or, for example, trialkoxyzirconates such as trimethoxyzirconate, triethoxyzirconate, tripropoxyzirconate, tributoxyzirconate, silica sols, amphiphilic substances, copper, graphite, ascorbyl palmitate, expanded natural graphite (ENG), silicon carbide, polysaccharides, fatty acids, alcyl silicon resins , metal-organic framework materials, where the metal-organic framework has a layer composition, or mixtures thereof.

Suitable binders are for example commercially available under trade names like Pural® SB (aluminum oxide), Ludox® AS 40 (colloidal silica), or Silres® MSE100 (methyl and methoxy groups containing polysiloxane).

Preferred binder, lubricants or additives are graphite, stearic acid, magnesium stearate, copper platelets, silicon carbide, expanded natural graphite (ENG), ascorbyl palmitate, polysaccharides, for example commercially available as Zusoplast PS1, aluminium oxide, for example commercially available as Pural SB or mixtures thereof.

In a preferred embodiment, the at least one shaped body comprises at least 1 % by weight of a binder and/or lubricant, which are selected from the group consisting of inorganic oxide, clay, concrete and graphite. Preferably the at least one shaped body comprises less than 10% by weight of a binder and/or lubricant and most preferably, the at least one shaped body comprises between 1.5% and 5% by weight of a binder and/or lubricant and most preferably between 2.5% and 3.5%. Alternatively, no binder or lubricant is used.

Further additives which can be used are, inter alia, amines or amine derivatives such as tetraalkylammonium compounds or amino alcohols and carbonate-comprising compounds, e.g. calcium carbonate. Such further additives are described, for instance, in EP 0 389 041 A1,

EP 0 200 260 A1 or WO 95/19222. Further, pore-forming agents such as organic polymers, preferably methylcellulose, polyethylene oxide or mixtures thereof can be added. Preferably, the at least one shaped body comprises from 1 % to 50% by weight of further additives and more preferably from 3% to 20% by weight. Alternatively, no further additives are used.

In a further preferred embodiment, the gas stored in the storage vessel is selected from the group consisting of natural gas, shale gas, town gas, methane, ethane, hydrogen, propane, propene, ethylene, carbon dioxide and combinations thereof. In a particularly preferred embodiment, the stored gas comprises methane and/or hydrogen to an extent of more than 70 vol.-%.

Further gases storable by means of the porous solid are acetylene, nitrogen oxides, oxygen, sulfur oxides, halogens, halogenated hydrocarbons, $NF_3$, $SF_6$, ammonia, hydrogen sulfide, ammonia, formaldehyde, noble gases, in particular helium, neon, argon, krypton and xenon.

For the purposes of the present invention, the terms "gas" is used in the interests of simplicity, but gas mixtures are likewise encompassed. The gas can also comprise small amounts of a liquid.

In a preferred embodiment, the storage vessel is mounted to a vehicle. The term "vehicle" includes but shall not be limited to cars, trucks, ships, airplanes, motorcycles, three-wheelers and the like.

Generally, processes for gas storage by means of shaped bodies are described in more detail for example in WO-A 2005/003622, WO-A 2003/064030, WO-A 2005/049484, WO-A 2006/089908 and DE-A 10 2005 012 087.

The invention also relates to a process for a storage of gas in a storage vessel according to the invention, comprising the following steps: conducting a gas into or out of the storage vessel, leading the gas through the opening of the at least one shaped body and passive or active removal of heat from the vessel wall of the storage vessel. An active removal of heat can be effectuated for example by a double wall comprising the heat transfer medium.

In the inventive process, heat is transferred from the interior of the storage vessel to the vessel wall by means of the at least one heat conducting plate.

Brief description of the drawings

The present invention is described in more detail at hand of the accompanying drawings in which:

Figure 1 shows an arrangement of shaped bodies and heat conducting plates in layers,

Figure 2 shows an embodiment of a heat conducting plate with a plurality of holes,

Figure 3 shows an embodiment of a heat conducing plate with four holes,

Figure 4 shows a longitudinal sectional view of a storage vessel according to the invention comprising a seal,

Figure 5 shows a cross-sectional view of a storage vessel according to the invention comprising a heat conducting plate with heat bridges,

Figure 6 shows a longitudinal sectional view of a storage vessel according to the invention comprising a plurality of shaped bodies with associated heat conducting plates,

Figure 7 shows a cross-sectional view of a storage vessel according to the invention comprising a shaped body with rim and a heat conducting plate with heat bridges and

Figure 8 shows a storage vessel according to the invention comprising an arrangement of shaped bodies and heat conducting plates and layers.

Figure 1 shows an arrangement of shaped bodies 3 and heat conducting plates 100 in layers. This arrangement can completely fill a storage vessel 1 with a vessel wall 5, wherein the shaped bodies 3 and the heat conducting plates 100 form together a cylinder, having the same diameter as the storage vessel 1, which is also cylindrical. Here, the outer circumference of the heat conducting plates 100 reaches the vessel wall, whereby the thermal coupling between the heat conducting plates 100 and the vessel wall 5 is established.

Figure 2 shows an embodiment of a heat conducting plate 100 with a plurality of holes 102. The heat conducing plate 100 further comprises an opening 19. The opening 19 is arranged centrally on the circular heat conducting plate 100. The holes 102 are distributed homogeneously over the heat conducting plate 100. All holes 102 possess the same diameter 108 and the same distance 106 between each other.

Figure 3 shows an embodiment of a heat conducing plate 100 with four holes 102 and an opening 19. By the four holes 102, an outer ring and radial bridges are formed by the heat conducting plate 100.

Figure 4 shows a longitudinal sectional view of a storage vessel 1 according to the invention comprising a seal 51. A gas stream 61 enters the storage vessel 1 through the opening 19 traversing the shaped bodies 3. The seal 51 separates a first surface 53 of a first shaped body 55 from a second surface 57 of an adjacent second shaped body 59 and from the vessel wall 5. The first surface 53 and the second surface 57 face in an axial direction 17 and the first surface 53 and the second surface 57 face each other. At the same time, the seal 51 separates the second surface 57 from the opening 19. The gas stream 61 entering the opening 19 is deflected to flow along the first surface 53 between the first surface 53 and the seal 51. As the seal 51 is impermeable for the gas stream 61, the gas permeates the solid porous material of the shaped body 3 and thus, permeates through the first surface 53. The gas stream 61 traverses the first shaped body 55 and reaches on a side of the first shaped body 55, which opposes the first surface 53, a further seal 51. Along this further seal 51, the gas stream 61 is led towards the vessel wall 5. In case an outlet 35 is provided together with an inlet 9 and the storage vessel 1 is filled with establishment of a flow-through, the gas stream 61 is further led along the vessel wall 5 back towards the inlet 9 and the outlet 35.

Figure 5 shows a radial cross-sectional view of a storage vessel 1 according to the invention comprising a heat conducting plate 100 with heat bridges 104. As in Figure 2, the heat conducting plate 100 comprises an opening 19 and holes 102. Additionally, heat bridges 104 are provided to connect the heat conducting plate 100 with the vessel wall 5. A gap 110 is provided between the outer circumference of the heat conducting plate 100 and the vessel wall 5 and between two heat bridges 104. The gap 110 can be flown through by the gas stream 61.

Figure 6 shows a longitudinal sectional view of a storage vessel 1 according to the invention comprising a plurality of shaped bodies 3 with associated heat conducting plates 100. In the shown section of the storage vessel 1, several shaped bodies 3 are arranged in layers and each shaped body 3 comprises a first spacer 25 being an outer rim 27 and a heat conducting plate 100. The dimensions of the shaped bodies 3 are defined by a longest first extension 12 in a radial direction 14 and a longest second extension 15 in the axial direction 17. Further, each shaped body 3 is associated with a heat conducting plate 100 having heat bridges 104 for establishing the thermal coupling between the heat conducting plate 100 and the vessel wall 5. In this embodiment, a thickness 112 of the heat conducting plate 100 is smaller than a thickness 114 of the heat bridges 104. The opening 19 has a constant radius over the axial length of the storage vessel 1.

Figure 7 shows a radial cross-sectional view of a storage vessel 1 according to the invention comprising a shaped body with a rim 27 and a heat conducting plate 100 with heat bridges 104. The shaped body 3 possesses a first spacer 25 being an outer rim 27 on its lateral surface 22. In this representation underneath the shaped body 3, a heat

conducting plate 100 is located having heat bridges 104 for the thermal coupling between the heat conducting plate 100 and the vessel wall 5 and for stabilizing the heat conducting plate 100 and the shaped body 3 in a fixed position in the storage vessel 1.

Figure 8 shows a storage vessel 1 according to the invention comprising an arrangement of shaped bodies 3 and heat conducting plates 100 and layers. The storage vessel 1, having an inner volume 13, and the shaped bodies 3 are of a cylindrical shape. Apart from a void space 37, surrounding the shaped bodies 3 and heat conducting plates 100. and the opening 19, the storage vessel 1 is completely filled by the shaped bodies 3 and the heat conducting plates 100. In a section 7 of the vessel wall 5 of the storage vessel 1, an inlet 9 and an outlet 35 are provided. In this illustrative example, the section 7 is an end face of the cylindrical storage vessel 1. The gas can enter the storage vessel 1 through the inlet 9 and further flow in parallel to the central axis 7 through the opening 19 of the shaped bodies 3 and the heat conducting plates 100.

In order to give an orientation, two directions are defined in relation to the storage vessel 1. An axial direction 17 is parallel to the center axis 11 and a radial direction 14 is in a rectangular direction referring to the central axis 11. The radial direction 14 is further parallel to a surface of the first end 21 and a surface of a second end 23 of the shaped bodies 3, which is opposing the first end 21. Here, the radial direction 14 is also parallel to the section 7 of the vessel wall 5. The opening 19 connects the first end 21 with the second end 23 of the shaped bodies 3.

A peripheral surface 39, here corresponding to a cylindrical shell of the cylindrical shaped bodies 3, is curved and faces towards a curved part of the vessel wall 5. As the void space 37 is provided between the peripheral surface 39 and the vessel wall 5, in this embodiment the peripheral surfaces of the shaped bodies 3 are not in direct contact with the vessel wall 5.

The thermal coupling between the shaped bodies 3 via the heat conducting plates 100 is established by heat bridges 104 of the heat conducting plates 100.

Comparative example

A cylindrical storage vessel, having a length of 1,001 m and a diameter of 30 cm, comprises 10 disc-like shaped bodies, each with a longest first extension, which is the diameter of one shaped body, of 30 cm and a longest second extension, which is the thickness of one shaped body, of 10 cm. A central opening with a diameter of 6 mm traverses the shaped bodies in longitudinal axial direction of the storage vessel. The shaped bodies comprise 700 g/L of the MOF material C300.

The storage vessel is filled with methane from 1 bar to 200 bar within 20 minutes, wherein the filling is started at a temperature of 20°C. After filling, 11 kg of methane are stored in the storage vessel.

Example

The storage vessel according to the comparative example additionally comprises one heat conducting plate made of copper between two shaped bodies, respectively. Each heat conducting plate has a diameter of 30 cm and a thickness of 300 $\mu$m and is traversed by the opening. Further, each heat conducting plate comprises four holes as illustrated in figure 3. The sum of the cross-sectional the four holes present each heat-conducting plates 30 %, referring to the total cross-sectional area of the heat conducting plate

A filling is effectuated according to the comparative example. After filling, 14 kg of methane are stored in the storage vessel.

Reference numerals

| | |
|---|---|
| 1 | Storage vessel |
| 3 | Shaped body |
| 5 | Vessel wall |
| 9 | Inlet |
| 11 | Central axis |
| 12 | Longest first extension |
| 13 | Inner volume |
| 14 | Radial direction |
| 15 | Longest second extension |
| 17 | Axial direction |
| 19 | Opening |

| | |
|---|---|
| 20 | Radial cross-sectional area |
| 21 | First end |
| 22 | Lateral surface |
| 23 | Second end |
| 25 | First spacer |
| 27 | Rim |
| 35 | Outlet |
| 37 | Void space |
| 39 | Peripheral surface |
| 51 | Seal |
| 53 | First surface |
| 55 | First shaped body |
| 57 | Second surface |
| 59 | Second shaped body |
| 61 | Gas stream |
| 100 | Heat conducting plate |
| 102 | Hole |
| 104 | Heat bridge |
| 106 | Distance between two holes |
| 108 | Diameter of holes |
| 110 | Gap |
| 112 | Thickness of heat conducting plate |
| 114 | Thickness of heat bridge |

**Claims**

1. A storage vessel (1) comprising at least one shaped body (3) of a porous solid, wherein the storage vessel (1) comprises a vessel wall (5) and at least one inlet (9), the storage vessel (1) has a central axis (11), being a longitudinal axis of the storage vessel (1) and/or perpendicular to a cross-sectional area of the at least one inlet (9), and a radial cross-sectional area (20),
wherein at least 75% of an inner volume (13) of the storage vessel (1) is covered by the at least one shaped body (3), the at least one shaped body (3) comprises an opening (19) in an axial direction (17), axial referring to the central axis (11) of the storage vessel (1), wherein the opening (19) extends from a first end (21) of the at least one shaped body (3) to an opposing second end (23) of the at least one shaped body (3)
and wherein the storage vessel (1) comprises at least one heat conducting plate (100), which is thermally coupled with the vessel wall (5).

2. The storage vessel according to claim 1, wherein the storage vessel (1) comprises at least two shaped bodies (3) and at least 80% of the radial cross-sectional area (20) is covered by one of the at least two shaped bodies (3), wherein a ratio between a longest first extension (12) of the one of the at least two shaped bodies (3) in a radial direction (14) and a longest second extension (15) of the one of the at least two shaped bodies (3) in the axial direction (17) is equal to or greater than 5, axial and radial referring to the central axis (11) of the storage vessel (1).

3. The storage vessel according to claim 1 or 2, wherein the storage vessel (1) comprises at least two shaped bodies (3), which are stacked in the axial direction (17) in the storage vessel (1), and wherein between the at least two shaped bodies (3) a seal (51) is provided, which is impermeable for a gas contained in the storage vessel (1).

4. The storage vessel according to claim 1, wherein the storage vessel (1) comprises exactly one shaped body (3), which is formed in one piece and wherein the one shaped body covers at least 85% of the inner volume (13) of the storage vessel (1).

5. The storage vessel according to any of claims 1 to 4, wherein at least one first spacer (25) is provided next to or on a lateral surface (22) of the at least one shaped body (3), the lateral surface (22) facing in the axial direction (17).

6. The storage vessel according to any of claims 1 to 5, wherein the at least one heat conducting plate (100) is made of a metal.

7. The storage vessel according to any of claims 1 to 6, wherein the at least one heat conducting plate (100) is made of aluminum or copper.

8. The storage vessel according to any of claims 1 to 7, wherein a direct contact is provided between the at least one heat conducting plate (100) and the at least one shaped body (3) for at least 30% of the total outer surface of one heat conducting plate (100).

9. The storage vessel according to any of claims 1 to 8, wherein the at least one heat conducting plate (100) has a thickness (112) in a range from 10 $\mu$m to 10 mm.

10. The storage vessel according to any of claims 1 to 9, wherein the at least one heat conducting plate (100) is arranged in parallel to the radial cross-sectional area (20) of the storage vessel (1).

11. The storage vessel according to any of claims 1 to 10, wherein one shaped body (3) is arranged between two heat conducting plates (100), which are arranged in parallel to each other.

12. The storage vessel according to any of claims 1 to 11, wherein the opening (19) traverses the at least one heat conducting plate (100).

13. The storage vessel according to any of claims 1 to 12, wherein the at least one heat conducting plate (100) comprises holes (102).

14. The storage vessel according to any of claims 1 to 13, wherein at least one gap is provided between the at least one heat conducting plate (100) and the vessel wall (5).

15. The storage vessel according to any of claims 1 to 14, wherein the porous solid is selected from the group consisting of activated charcoals, zeolites, activated aluminia, silica gels, open-pore polymer foams, metal hydrides, metal-organic frameworks (MOF) and combinations thereof.

16. Process for storage of gas in a storage vessel (1) according to any of claims 1 to 15, comprising the following steps: conducting a gas into or out of the storage vessel (1), leading the gas through the opening (19) of the at least one shaped body (3) and passive or active removal of heat from the vessel wall (5) of the storage vessel (1).

Fig. 1

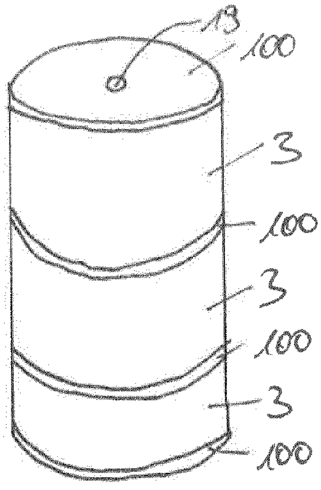


Fig. 2

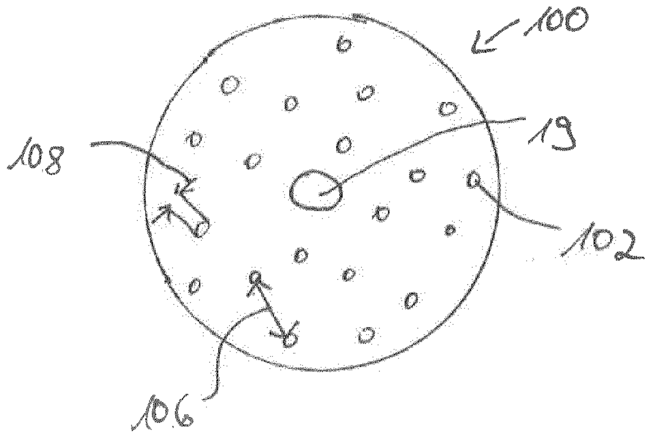


Fig. 3

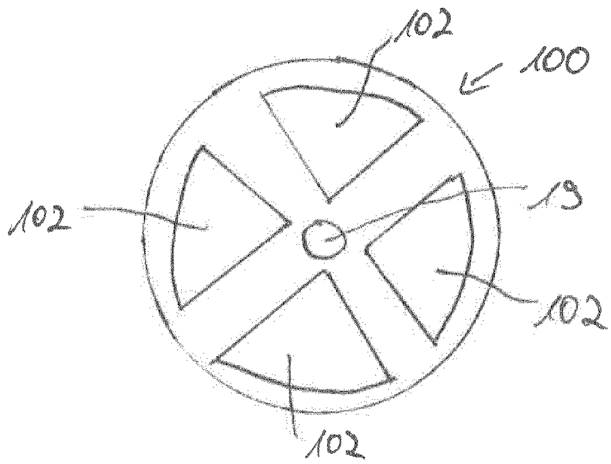

Fig. 4

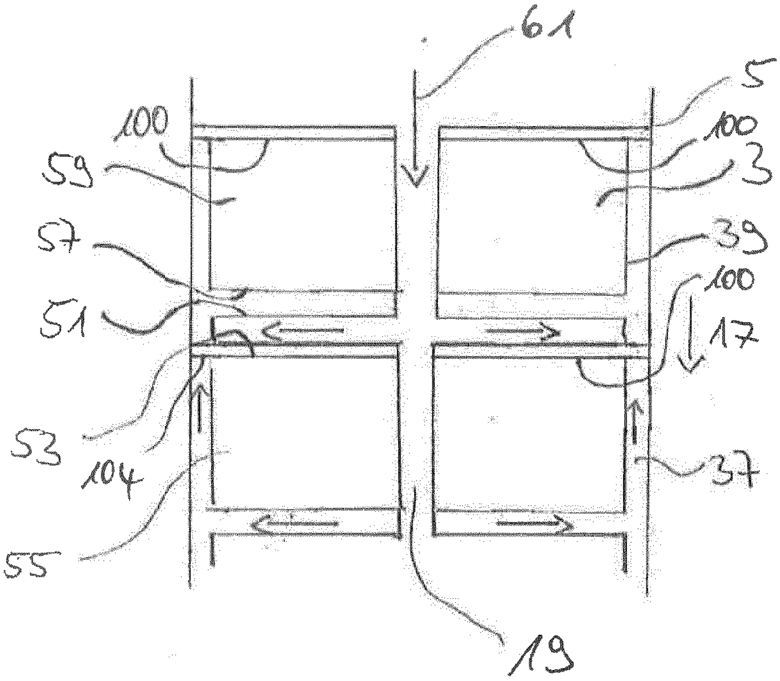
61
5
100
100
59
3
57
39
100
51
17
53
104
37
55
19

Fig. 5

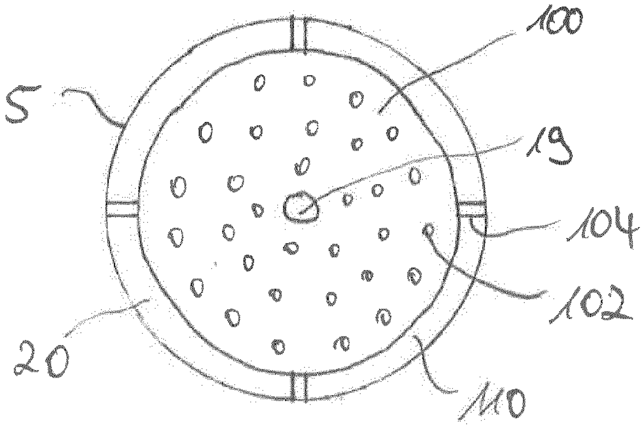
100
5
19
104
102
20
110

Fig. 6

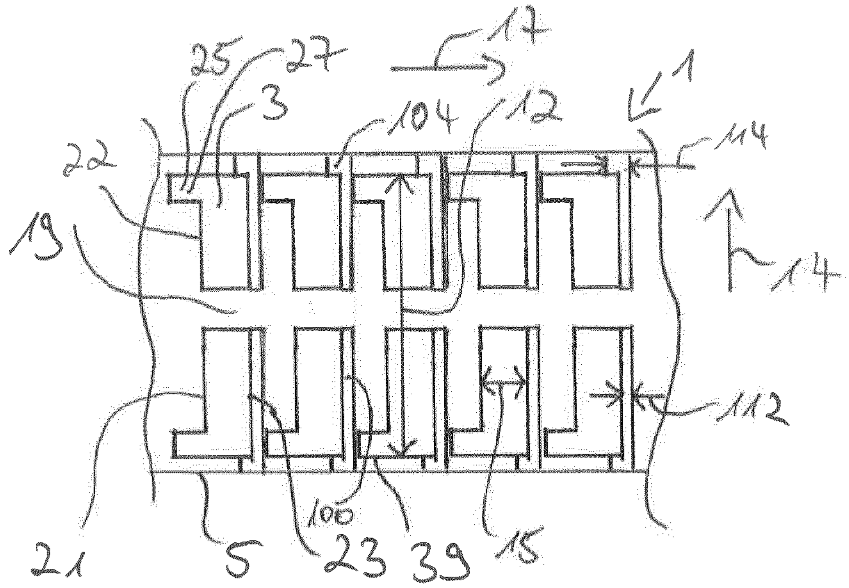
25
27
17
3
104
12
1
22
114
19
14
112
100
21
5
23
39
15

Fig. 7

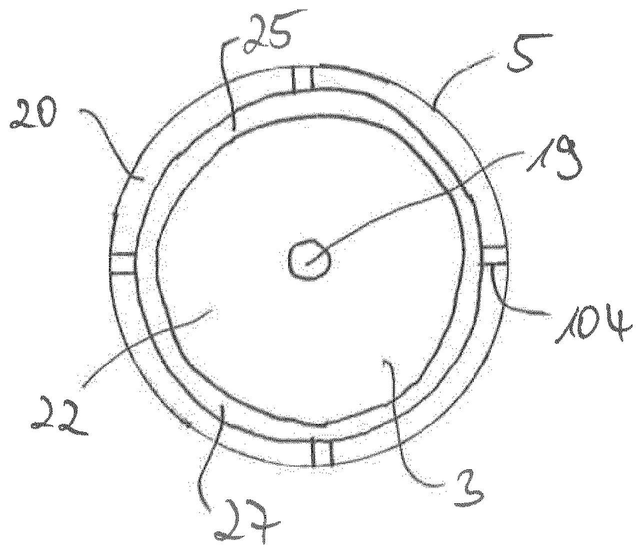
25
5
20
19
104
22
3
27

Fig. 8

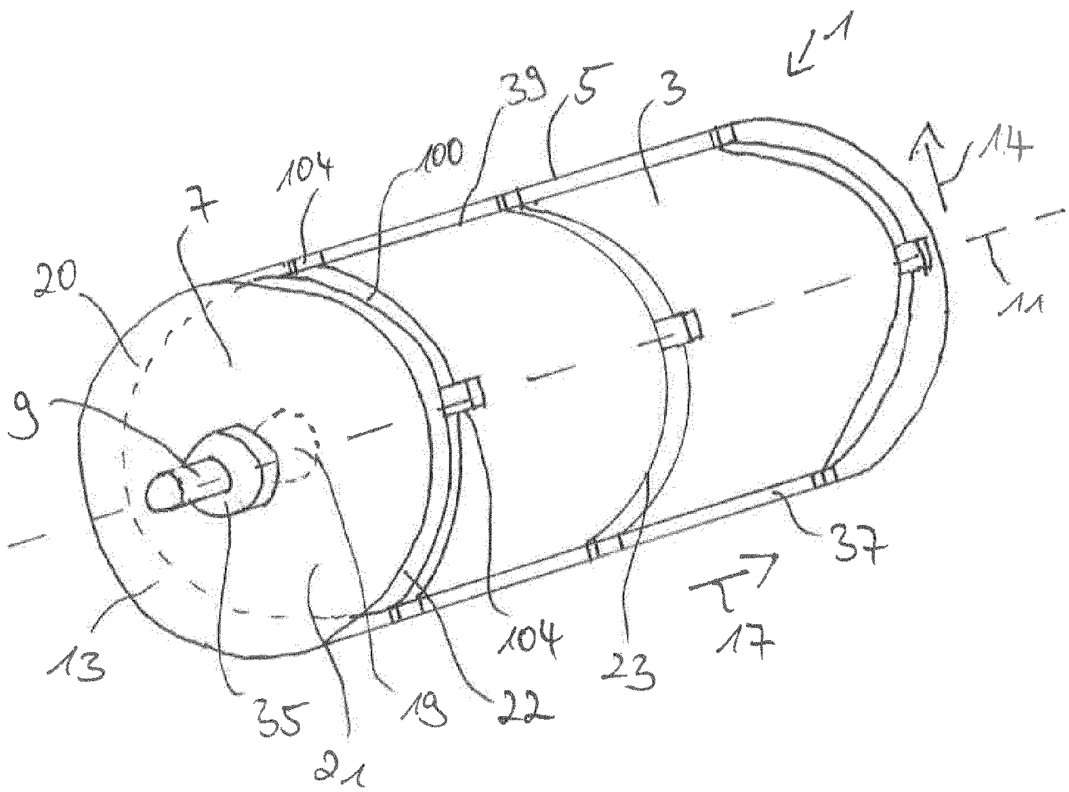

Europäisches Patentamt
European Patent Office
Office européen des brevets

# EUROPEAN SEARCH REPORT

Application Number
EP 15 16 7076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 122 330 A (MANNESMANN AG) 11 January 1984 (1984-01-11) * abstract; figures * * page 1, line 130 - page 2, line 33 * ----- | 1-16 | INV. F17C11/00 |
| X | US 2003/019765 A1 (YANG JEFFERSON YS [US] ET AL) 30 January 2003 (2003-01-30) * abstract; figures * * page 2, paragraph 30 - paragraph 32 * ----- | 1-16 | |
| X | US 4 446 111 A (HALENE CLEMENS [DE] ET AL) 1 May 1984 (1984-05-01) * abstract; figures * * column 3, line 65 - column 4, line 9 * ----- | 1-16 | |
| X | DE 10 2004 014144 A1 (TOYOTA JIDOSHOKKI KARIYA KK [JP]; TOYOTA MOTOR CO LTD [JP]) 25 November 2004 (2004-11-25) * abstract; figures * * page 4, paragraph 28 - paragraph 29 * * page 6, paragraph 52 * * page 7, paragraphs 56,57,61 * * page 14, paragraph 98 * ----- | 1-16 | TECHNICAL FIELDS SEARCHED (IPC): F17C |
| X | US 2010/326992 A1 (DE RANGO PATRICIA [FR] ET AL) 30 December 2010 (2010-12-30) * abstract; figures * * page 1, paragraph 35 - paragraph 38 * * page 2, paragraphs 43,54 * ----- | 1-16 | |

The present search report has been drawn up for all claims

3

| Place of search | Date of completion of the search | Examiner |
|---|---|---|
| The Hague | 16 October 2015 | Lapeyrère, Jean |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 15 16 7076

This annex lists the patent family members relating to the patent documents cited in the above-mentioned European search report. The members are as contained in the European Patent Office EDP file on
The European Patent Office is in no way liable for these particulars which are merely given for the purpose of information.

16-10-2015

| Patent document cited in search report | Publication date | Patent family member(s) | Publication date |
|---|---|---|---|
| GB 2122330 A | 11-01-1984 | BR 8302026 A | 31-01-1984 |
| | | BR 8303026 A | 31-01-1984 |
| | | DE 3223777 A1 | 29-12-1983 |
| | | FR 2529294 A1 | 30-12-1983 |
| | | GB 2122330 A | 11-01-1984 |
| | | IT 1161184 B | 11-03-1987 |
| | | JP S58225300 A | 27-12-1983 |
| US 2003019765 A1 | 30-01-2003 | JP 2003120898 A | 23-04-2003 |
| | | TW 533620 B | 21-05-2003 |
| | | US 2003019765 A1 | 30-01-2003 |
| | | US 2004178083 A1 | 16-09-2004 |
| US 4446111 A | 01-05-1984 | BR 8203052 A | 10-05-1983 |
| | | DE 3125276 A1 | 13-01-1983 |
| | | FR 2508596 A1 | 31-12-1982 |
| | | GB 2103348 A | 16-02-1983 |
| | | IT 1190777 B | 24-02-1988 |
| | | JP S588899 A | 19-01-1983 |
| | | JP H0235681 B2 | 13-08-1990 |
| | | US 4446111 A | 01-05-1984 |
| DE 102004014144 A1 | 25-11-2004 | DE 102004014144 A1 | 25-11-2004 |
| | | KR 20040084683 A | 06-10-2004 |
| | | US 2005000970 A1 | 06-01-2005 |
| | | US 2008203101 A1 | 28-08-2008 |
| US 2010326992 A1 | 30-12-2010 | AT 529685 T | 15-11-2011 |
| | | AU 2008339797 A1 | 02-07-2009 |
| | | BR PI0820138 A2 | 12-05-2015 |
| | | CA 2708647 A1 | 02-07-2009 |
| | | CN 101910703 A | 08-12-2010 |
| | | CN 103759134 A | 30-04-2014 |
| | | DK 2235424 T3 | 06-02-2012 |
| | | EP 2235424 A2 | 06-10-2010 |
| | | ES 2377272 T3 | 26-03-2012 |
| | | FR 2924787 A1 | 12-06-2009 |
| | | IL 206312 A | 27-06-2013 |
| | | JP 5529752 B2 | 25-06-2014 |
| | | JP 2011508855 A | 17-03-2011 |
| | | US 2010326992 A1 | 30-12-2010 |
| | | WO 2009080975 A2 | 02-07-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080168776 A1
- US 20090229555 A1
- US 8100151 B2
- FR 2957636 A1
- US 20120227583 A1
- DE 102009040947 A1
- WO 2014057416 A
- US 5648508 A
- EP 0709253 A
- DE 10355087 A
- WO 2005049892 A
- WO 03102000 A
- WO 9429408 A
- EP 0592050 A1
- WO 9413584 A
- JP 3037156 A
- EP 0102544 B1
- EP 0389041 A1
- EP 0200260 A1
- WO 9519222 A
- WO 2005003622 A
- WO 2003064030 A
- WO 2005049484 A
- WO 2006089908 A
- DE 102005012087 A


### Non-patent literature cited in the description


- **M. O'KEEFFE et al.** *J. Sol. State Chem.,* 2000, vol. 152, 3-20
- **H. LI et al.** *Nature,* 1999, vol. 402, 276
- **M. EDDAOUDI et al.** *Topics in Catalysis,* 1999, vol. 9, 105-111
- **CHEN et al.** *Science,* 2001, vol. 291, 1021-1023
- *Pure & Appl. Chem.,* 1985, vol. 57, 603-619
- Metal-Organic Frameworks. Wiley-VCH Verlag, 2011
- Ullmann's Enzyklopädie der Technischen Chemie. 1972, vol. 2, 313